# EUROPÄISCHE PATENTANMELDUNG

(11) **EP 1 921 469 A2**
(43) Veröffentlichungstag der Anmeldung: **14.05.2008**
(21) Anmeldenummer: 07020682.6
(22) Anmeldetag: 23.10.2007
(51) Int. Cl.: G01V 8/20

(54) **Optoelektronische Sensoranordnung und Verfahren zum Justieren einer optoelektronischen Sensoranordnung**

(30) Priorität: 10.11.2006 DE 102006053359
(71) Anmelder: SICK AG, 79183 Waldkirch (DE)
(72) Erfinder: Schmitz, Stephan, Dr., 79108 Freiburg (DE); Kohler, Markus, 79312 Emmendingen (DE)
(74) Vertreter: Patentanwälte Westphal, Mussgnug & Partner

(57) **Zusammenfassung**

Verfahren zum Justieren einer optoelektronischen Sensoranordnung (10) zur Überwachung eines Überwachungsbereichs (20) mit einem ersten Gehäuse (12), in welchem wenigstens zwei Lichtsender angeordnet sind, und mit einem zweiten Gehäuse (14), in welchem wenigstens zwei Lichtempfänger angeordnet sind, mit den Schritten:
- Anordnen des ersten Gehäuses (12) an einer ersten Seite des Überwachungsbereichs (20) derart, dass ein vom Lichtsender ausgesandter Lichtstrahl den Überwachungsbereich (20) durchquert,
- Anordnen des zweiten Gehäuses (14) an dem ersten Gehäuse (12) derart, dass die Gehäuse (12, 14) parallel zueinander angeordnet werden, wobei diese Position eine Solllage im Hinblick auf die Winkel (α, γ) gegenüber der Horizontalen definiert,
- Bestimmen und Erfassen der Solllage des zweiten Gehäuses (14) im Raum,
- Anordnen des zweiten Gehäuses (14) auf einer der ersten Seite gegenüberliegenden Seite des Überwachungsbereichs und
- Ausrichten des zweiten Gehäuses (14) derart, dass die Winkel (α, γ) gegenüber der Horizontalen den entsprechenden Winkeln (α, γ) der Solllage entsprechen.

## Beschreibung

Die Erfindung betrifft ein Verfahren zum Justieren einer optoelektronischen Sensoranordnung sowie eine optoelektronische Sensoranordnung.

Bekannt sind optoelektronische Sensoranordnungen mit einem ersten Gehäuse, in welchem wenigstens zwei Lichtsender angeordnet sind, und mit einem zweiten Gehäuse, in welchem wenigstens zwei Lichtempfänger angeordnet sind. Derartige optoelektronische Sensoranordnungen werden insbesondere zur Überwachung eines Überwachungsbereichs verwendet und sind insbesondere mit mehreren Lichtsendern und Lichtempfängern als Lichtgitter oder Lichtvorhang ausgebildet.

Das Ausrichten einer derartigen optoelektronischen Sensoranordnung ist für eine zuverlässige Funktionsweise der Sensoranordnung unerlässlich, jedoch oft sehr zeitaufwändig. Grund dafür ist, dass das zweite Gehäuse in sechs Freiheitsgraden relativ zu dem ersten Gehäuse ausgerichtet werden muss. Wird beispielsweise das erste Gehäuse als fester Bezugspunkt definiert, kann das zweite Gehäuse einerseits von der Sollposition in Richtung der X-Achse, d.h. der Strahlachse, in Richtung der Y-Achse, d.h. der Querachse, sowie in Richtung der Z-Achse, d.h. in Richtung der Längsachse, von der Sollposition abweichen. Zudem kann das zweite Gehäuse um die X-Achse, die Y-Achse und/oder die Z-Achse verdreht sein.

Um die beiden Gehäuse relativ zueinander auszurichten, ist es bekannt, in einem der beiden Gehäuse zwei Lichtquellen zur Aussendung von Testlichtstrahlen, beispielsweise zwei Laser, anzuordnen, deren Testlichtstrahlen auf entsprechende Testempanzuordnen, deren Testlichtstrahlen auf entsprechende Testempfangselemente, welche in dem anderen Gehäuse angeordnet sind, ausgerichtet werden müssen. Diese Art der Ausrichtung ist jedoch kostenaufwändig, da zwei Testlichtquellen in einem der Gehäuse benötigt werden. Zudem werden zur Justierung auch zwei Personen benötigt, die die Ausrichtung durchführen.

Die EP 1 348 983 A1 offenbart einen optoelektronischen Sensor zur optischen Erfassung eines Objekts innerhalb eines Überwachungsbereichs, welcher einen Lichtsender zum Aussenden eines Sendelichtstrahls sowie einen Lichtempfänger zur Erzeugung von Lichtempfangssignalen in Abhängigkeit von einer Lichtbeaufschlagung aufweist. Um das Objekt in dem Überwachungsbereich korrekt zu erfassen, wird eine Vermessung der Position des Sensors bezüglich des Überwachungsbereichs dadurch ermöglicht, dass der Sensor mit einer Positionsmesseinrichtung zur Erzeugung wenigstens eines Positionserfassungssignals sowie mit einer Auswerte- und Steuereinrichtung zur Berechnung einer aktuellen Raumposition, Ausrichtung und/oder Winkellage des Sensors anhand des Positionserfassungssignals ausgestattet ist. Durch die Verknüpfung der Raumposition, Ausrichtung oder Winkellage des optoelektronischen Sensors mit dem Erfassungssignal des zu erfassenden Objekts kann eine korrekte räumliche Zuordnung zwischen dem Objekterfassungssignal und dem entsprechenden Objekt erstellt werden, so dass das Signal nicht unbeabsichtigt einem falschen Objekt zugeordnet wird. Eine Ausrichtung von Lichtsender und Lichtempfänger relativ zueinander durch den Benutzer ist jedoch nicht von Nöten.

Die Aufgabe der Erfindung besteht darin, dem Benutzer eine einfache, kostengünstige, aber exakte Ausrichtung einer optoelektronischen Sensoranordnung zu ermöglichen.

Die Aufgabe der Erfindung wird gelöst durch ein Verfahren zum Justieren einer optoelektronischen Sensoranordnung mit den Merkmalen des Patentanspruchs 1 sowie eine optoelektronische Sensoranordnung mit den Merkmalen des Patentanspruchs 8.

Vorteilhafte Ausgestaltungen und Weiterbildungen der Erfindung sind in den Unteransprüchen angegeben.

Das erfindungsgemäße Verfahren zum Justieren einer optoelektronischen Sensoranordnung zur Überwachung eines Überwachungsbereichs, welche ein erstes Gehäuse und ein zweites Gehäuse aufweist, wobei in dem ersten Gehäuse wenigstens zwei Lichtsender und in dem zweiten Gehäuse wenigstens zwei Lichtempfänger angeordnet sind, weist folgende Schritte auf. Selbstverständlich ist es auch möglich, in dem ersten Gehäuse wenigstens zwei Lichtempfänger und in dem zweiten Gehäuse wenigstens zwei Lichtsender anzuordnen. Das erste Gehäuse wird an einer ersten Seite des Überwachungsbereichs derart angeordnet, dass ein von einem Lichtsender ausgesandter Lichtstrahl den Überwachungsbereich in beliebiger Art und Weise durchquert. Anschließend wird das zweite Gehäuse zunächst an dem ersten Gehäuse derart angeordnet, dass die Gehäuse parallel zueinander angeordnet werden, wobei diese Position eine Solllage im Hinblick auf die Winkel gegenüber der Horizontalen definiert. Dabei ist davon auszugehen, dass die Lichtsender und die Lichtempfänger derart innerhalb der Gehäuse angeordnet sind, dass eine relative Anordnung der Gehäuse zueinander auch eine entsprechende relative Anordnung der Lichtsender und Lichtempfänger zueinander zur Folge hat. Die Solllage des zweiten Gehäuses im Raum wird bestimmt und erfasst. Wird beispielsweise das zweite Gehäuse derart an dem ersten Gehäuse angeordnet, dass jeweils ein Lichtempfänger direkt vor einem zugehörigen Lichtsender angeordnet ist, müsste theoretisch nun lediglich das zweite Gehäuse entlang der Strahlachse der Lichtsender ohne Verdrehung oder Versatz in Längs- oder Querrichtung bis auf die gegenüberliegende Seite des Überwachungsbereichs verschoben werden. Eine derartige Verschiebung ist jedoch praktisch nicht möglich. Daher wird nun das zweite Gehäuse auf einer der ersten Seite gegenüberliegenden Seite des Überwachungsbereichs angeordnet und derart ausgerichtet, dass die Winkel gegenüber der Horizontalen den entsprechenden Winkeln der Solllage entsprechen. Ein zweiter Laser zum Justieren der optoelektronischen Sensoranordnung ist somit nicht mehr von Nöten. Auch kann in der Regel eine einzelne Person die optoelektronische Sensoranordnung justieren, ohne dass eine zweite Person mithelfen muss.

Vorzugsweise erfolgt die Anordnung des zweiten Gehäuses auf der der ersten Seite gegenüberliegenden Seite des Überwachungsbereichs derart, dass ein von einem im ersten Gehäuse angeordneten Testlichtsender ausgesandter Lichtstrahl auf einen in dem zweiten Gehäuse angeordneten Testlichtempfänger trifft. Der Testlichtempfänger kann dabei als funktionsfähiger Lichtempfänger der optoelektronischen Sensoranordnung oder auch lediglich als Zielmarke ausgebildet sein. Auf diese Weise ist gewährleistet, dass beim Bewegen des zweiten Gehäuses auf die der ersten Seite gegenüberliegende Seite des Überwachungsbereichs kein Versatz entlang der Längsrichtung oder der Querrichtung auftritt.

Vorzugsweise erfolgt die Bestimmung der Solllage des zweiten Gehäuses im Raum mit einem Neigungssensor, da der Großteil der optoelektronischen Sensoranordnungen senkrecht verbaut wird, wobei die Neigungen gegenüber der Horizontalen besonders exakt justiert werden müssen, diese jedoch mit einem Neigungssensor auch mit hoher Genauigkeit erfasst werden können. Insbesondere die Ausbildung der Neigungssensoren als Beschleunigungssensoren ermöglichen bei senkrechtem Aufbau der optoelektronischen Sensoranordnung eine genaue Erfassung der Winkel gegenüber der Horizontalen.

Bei einer besonders bevorzugten Ausführungsform der Erfindung wird die Ausrichtung des zweiten Gehäuses mit einer Auswerteeinheit überprüft, welche die aktuelle Neigung des zweiten Gehäuses mit der Solllage vergleicht und den Vergleich grafisch darstellt. Der Benutzer kann somit direkt anhand der Grafik feststellen, ob die Ausrichtung des zweiten Gehäuses im Hinblick auf die Winkel gegenüber der Horizontalen korrekt ist und die Winkel gegenüber der Horizontalen den Winkeln der Solllage entsprechen. Insbesondere kann besonders einfach erkannt werden, ob eine Anderung an der Ausrichtung des zweiten Gehäuses zu einer Verbesserung oder zu einer größeren Abweichung von den gewünschten Winkeln der Solllage führt.

In einer bevorzugten Ausführungsform erfolgt die grafische Darstellung derart, dass die aktuelle Neigung als ein Symbol in einem Koordinatensystem abgebildet wird, dessen Ursprung der Solllage entspricht. Eine derartige grafische Darstellung ist vergleichbar mit einer elektronischen Ausführung einer mechanischen Dosenlibelle.

In einer alternativen bevorzugten Ausführungsform erfolgt die grafische Darstellung derart, dass die aktuelle Neigung in zwei senkrecht stehenden Achsen unabhängig voneinander durch zwei Symbole dargestellt wird. Eine derartige Darstellung entspricht im Wesentlichen einer elektronischen Ausführung zweier senkrecht zueinander angeordneten mechanischer Röhrenlibellen. Anders als bei den mechanischen Libellen wird jedoch die gewünschte Sollposition nicht lediglich durch die Schwerkraft bestimmt, sondern kann relativ zu anderen Gehäusen oder ähnlichem bestimmt werden. Somit stellt die Solllage nicht notwendigerweise die exakt horizontale Ausrichtung dar, sondern kann ihrerseits auch gegen die Horizontale geneigt sein.

Die Ausrichtung gegenüber der Vertikalen ist weniger kritisch, da in der Regel die von den Lichtsendern ausgesandten Lichtstrahlen eine Lichtkeule aufweisen, die auch bei Verdrehung des zweiten Gehäuses gegenüber der Vertikalen und ansonsten exakter Positionierung weiterhin auf die entsprechenden Lichtempfänger auftreffen. Für zuverlässige Messergebnisse wird jedoch anschließend nach Justierung des zweiten Gehäuses im Hinblick auf die Winkel gegenüber der Horizontalen das zweite Gehäuse auch im Hinblick auf den Winkel gegenüber der Vertikalen ausgerichtet, wozu beispielsweise der Testlichtempfänger reflektierend ausgebildet werden kann, um festzustellen, ob der reflektierte Lichtstrahl des von dem Testlichtsenders ausgesandten Lichtstrahls in sich selbst zurück reflektiert wird.

Die erfindungsgemäße optoelektronische Sensoranordnung weist ein erstes Gehäuse auf, in welchem wenigstens zwei Lichtsender angeordnet sind, und weist weiterhin ein zweites Gehäuse auf, in welchem wenigstens zwei Lichtempfänger angeordnet sind. Weiterhin ist an dem zweiten Gehäuse ein Neigungssensor zur Erfassung der Neigung des zweiten Gehäuses gegenüber der Horizontalen angeordnet, wobei der Neigungssensor mit einer Auswerteeinheit verbunden ist, welche derart ausgebildet ist, dass die aktuelle Neigung des zweiten Gehäuses mit einer Solllage verglichen werden kann.

Der Neigungssensor ermöglicht dabei das Erfassen der aktuellen Neigung des zweiten Gehäuses, wobei die Auswerteeinheit eine direkte Darstellung der aktuellen Neigung relativ zur Solllage ermöglicht, welche es dem Benutzer ermöglicht, einfach und ohne weitere Hilfe eine Ausrichtung des zweiten Gehäuses vorzunehmen.

Bei einer vorteilhaften Ausbildungsform der Erfindung weist das erste Gehäuse eine Anlagekontur auf, an welche das zweite Gehäuse mit einer entsprechenden Anlagekontur anlegbar ist. Bei der Herstellung des ersten und des zweiten Gehäuses wird bereits sichergestellt, dass die Lichtsender und die Lichtempfänger exakt relativ zu dem Gehäuse und der Anlagekontur ausgerichtet sind, so dass bei Anlegen des ersten Gehäuses mit seiner Anlagekontur an die entsprechende Anlagekontur des zweiten Gehäuses sichergestellt ist, dass die Lichtsender und die Lichtempfänger im Hinblick auf die Winkel gegenüber der Horizontalen und auch der Vertikalen sowie im Hinblick auf ihre Position entlang der Querachse und in Richtung der Längsachse exakt zueinander ausgerichtet sind. Wird dann das zweite Gehäuse an das erste Gehäuse angelegt, ist die Solllage des zweiten Gehäuses im Raum relativ zu dem ersten Gehäuse eindeutig bestimmt und kann von der Auswerteeinheit erfasst werden.

Vorzugsweise ist die Auswerteeinheit mit einem Display verbunden, auf welchem das Ergebnis des Vergleichs grafisch darstellbar ist, so dass die Bedienung für den Benutzer weiter vereinfacht wird. Dazu wird vorzugsweise sowohl die aktuelle Neigung des zweiten Gehäuses als auch die Solllage des zweiten Gehäuses grafisch dargestellt, so dass der Benutzer bei geringfügigen Änderungen an der Ausrichtung des zweiten Gehäuses erkennen kann, ob die Änderungen die Ausrichtung in der gewünschten Weise verbessern.

Insbesondere die Ausrichtung von optoelektronischen Sensoranordnungen, welche in dem ersten Gehäuse mehrere Lichtsender und in dem zweiten Gehäuse entsprechend viele Lichtempfänger aufweisen und somit ein Lichtgitter bilden, wird durch das erfindungsgemäße Verfahren deutlich vereinfacht.

Die Erfindung wird anhand der folgenden Figuren ausführlich erläutert. Es zeigt:
- Figur 1a: eine perspektivische Ansicht einer opto-elektronischen Sensoranordnung mit einem ersten und einem zweiten Gehäuse und einer Darstellung der Freiheitsgrade, in welchen das zweite Gehäuse gegenüber dem ersten Gehäuse ausgerichtet werden muss,
- Figur 1b: eine weitere schematische Darstellung der optoelektronischen Sensoranordnung gemäß Figur 1a mit dem zweiten Gehäuse in einer anderen relativen Position,
- Figur 2: eine schematische Darstellung der grafischen Darstellung der aktuellen Neigung des zweiten Gehäuses und der Solllage und
- Figur 3: eine schematische Darstellung einer weiteren Ausführungsform einer grafischen Darstellung der aktuellen Neigung und der Solllage des zweiten Gehäuses.

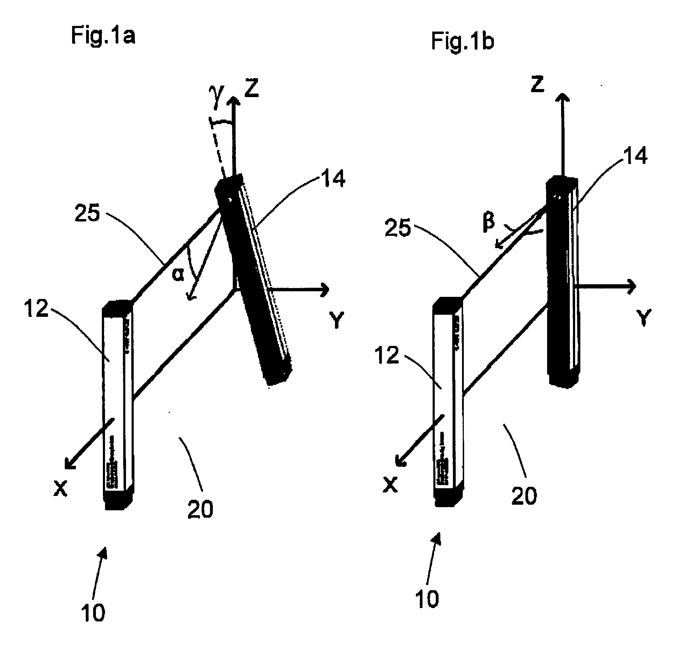

In den Figuren 1a und 1b ist eine optoelektronische Sensoranordnung 10 mit einem ersten Gehäuse 12 und einem zweiten Gehäuse 14 dargestellt. Sowohl das erste Gehäuse 12 als auch das zweite Gehäuse 14 weisen langgestreckte Grundkörper auf, wobei in dem ersten Gehäuse 12 mehrere Lichtsender und in dem zweiten Gehäuse 14 mehrere Lichtempfänger angeordnet sind, so dass das erste Gehäuse 12 und das zweite Gehäuse 14 ein Lichtgitter bilden. Das erste Gehäuse 12 und das zweite Gehäuse 14 werden derart zueinander angeordnet, dass von den Lichtsendern ausgesandtes Licht auf die Lichtempfänger fallen kann und dabei einen Überwachungsbereich 20 durchdringt, welcher somit zwischen dem ersten Gehäuse 12 und dem zweiten Gehäuse 14 angeordnet ist.

Bei der Montage der Sensoranordnung 10 wird zunächst das erste Gehäuse 12 an einer ersten Seite des Überwachungsbereichs 20 angeordnet und gibt dadurch die gewünschte Position für das zweite Gehäuse 14 vor. Ein Koordinatensystem mit X-Achse, Y-Achse und Z-Achse wird durch die Lage des ersten Gehäuses 12 definiert, wobei die X-Achse entlang oder parallel zu der Strahlachse der Lichtsender, die Y-Achse horizontal quer zu der Strahlachse und die Z-Achse parallel zu der Längsachse des ersten Gehäuses 12 verläuft. Eine Verdrehung um die X-Achse wird mit einem Winkel γ, die Verdrehung um die Y-Achse mit einem Winkel α und die Verdrehung um die Z-Achse mit einem Winkel β bezeichnet.

Um die Sensoranordnung 10 zu justieren, wird das zweite Gehäuse 14 zunächst an dem ersten Gehäuse 12 angeordnet, so dass jeweils ein Lichtempfänger direkt vor einem zugehörigen Lichtsender angeordnet ist. Alternativ kann auch das zweite Gehäuse 14 um 180° um die Längsachse gedreht werden, wesentlich ist, dass die beiden Gehäuse 12, 14 parallel zueinander angeordnet werden. Eine derartige relative Anordnung der beiden Gehäuse 12, 14 zueinander wird insbesondere durch entsprechende Anlagekonturen ermöglicht. Beispielsweise kann die Anlagekontur durch die umlaufende Kanten der zu einer Seite offenen Gehäuse 12, 14 gebildet werden. Wesentlich ist, dass die Lichtsender und die Lichtempfänger exakt zu dem jeweiligen Gehäuse 12, 14 ausgerichtet sind, so dass bei Anordnung des zweiten Gehäuses 14 an dem ersten Gehäuse 12 und ggf. Anlage der Anlagekonturen eine exakte Ausrichtung von Lichtsender und Lichtempfänger zueinander gewährleistet ist und insbesondere beide Gehäuse 12, 14 durch identische Winkel α, β, γ in ihrer Lage relativ im Raum charakterisiert sind. Insbesondere definiert somit diese Position eine Solllage im Hinblick auf die Winkel α, γ gegenüber der Horizontalen, welche mit Hilfe eines Neigungssensors, insbesondere eines Beschleunigungssensors, bestimmt und erfasst werden können.

In dem ersten Gehäuse ist weiterhin ein Testlichtsender, beispielsweise ein Justierlaser, angeordnet, welcher einen Lichtstrahl 25 parallel zu den von den Lichtsendern ausgesandten Lichtstrahlen aussendet welcher auf einen in dem zweiten Gehäuse 14 angeordneten Testlichtempfänger auftrifft, wodurch die Ausrichtung des zweiten Gehäuses 14 in Richtung der Z-Achse und der Y-Achse ermöglicht wird. Der Testlichtempfänger kann als aktives Element wie beispielsweise als Lichtempfänger oder auch lediglich als Zielmarke ausgebildet sein. Die Ausrichtung entlang der X-Achse wird durch die Dimension des Überwachungsbereichs 20 festgelegt. Ist das zweite Gehäuse 14 an die gewünschte Position in relativ zu dem Überwachungsbereich 20 an eine der ersten Seite gegenüberliegende Seite überführt worden und wurde mit dem Lichtstrahl 25 die Ausrichtung des zweiten Gehäuses 14 entlang der Z-Achse und der Y-Achse überprüft, ist anschließend ein Ausrichten des zweiten Gehäuses 14 im Hinblick auf die Winkel α, β, γ insbesondere die Winkel α, γ gegenüber der Horizontalen, von Nöten. Diese Ausrichtung erfolgt derart, dass die Winkel α, γ gegenüber der Horizontalen den entsprechenden Winkeln α, γ der Solllage angepasst werden.

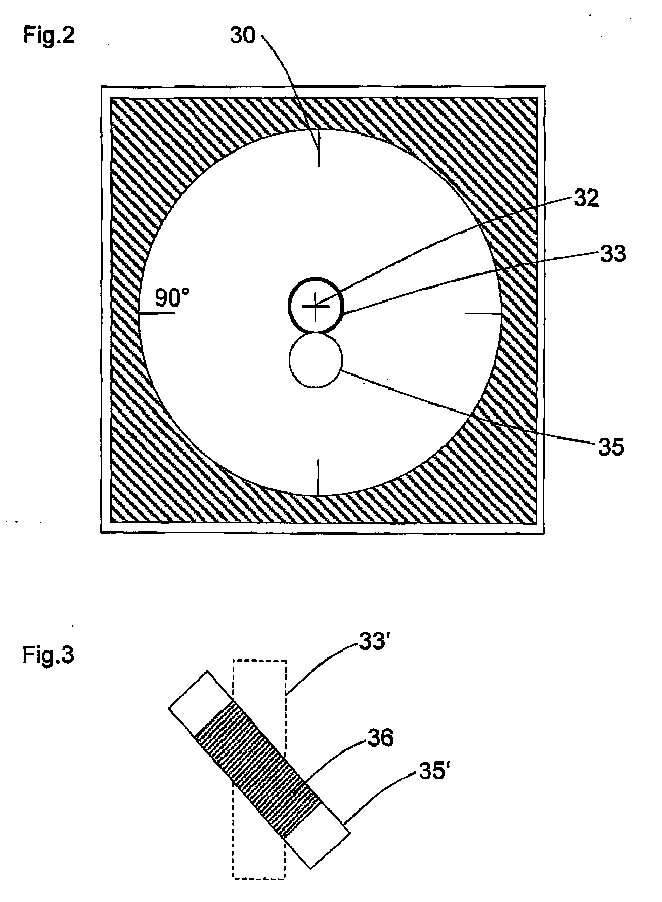

Eine derartige Ausrichtung erfolgt beispielsweise mit Hilfe einer Auswerteeinheit, die die aktuelle Neigung des zweiten Gehäuses 14, welche insbesondere mit dem Neigungssensor bestimmt wird, mit der Solllage vergleicht und den Vergleich grafisch darstellt. Zwei Beispiele für eine derartige grafische Darstellung finden sich in den Figuren 2 und 3.

In der Figur 2 ist die grafische Darstellung in Form einer elektronischen Libelle, welche mit einer mechanischen Dosenlibelle vergleichbar ist, dargestellt. Auf dem Display wird ein Koordinatensystem 30 mit einem Ursprung 32 dargestellt, wobei' der Ursprung 32 der Solllage entspricht. Die Solllage ist somit nicht wie bei einer mechanischen Libelle durch die exakte Ausrichtung in horizontaler Richtung gegeben, sondern wird mit Hilfe eines Neigungssensors aus der Position bestimmt, welche von dem zweiten Gehäuse 14 bei Anlage an dem ersten Gehäuse 12 eingenommen wird. Die aktuelle Neigung des zweiten Gehäuses 14 kann als ein beliebiges Symbol 35, beispielsweise als Kreis, in dem Koordinatensystem 30 dargestellt werden. Vorzugsweise ist um den Ursprung 32 ein entsprechendes Symbol 33 angeordnet, so dass von dem Benutzer bei der Ausrichtung des zweiten Gehäuses 14 darauf zu achten ist, das die aktuelle Neigung repräsentierende Symbol 35 in Deckung mit dem die Solllage repräsentierenden Symbol 33 zu bringen.

Eine nicht dargestellte Ausführungsform der grafischen Darstellung kann auch darin bestehen, die grafische Darstellung vergleichbar zu zwei senkrecht zueinander stehenden mechanischen Röhrenlibellen auszubilden, was bedeutet, dass auf dem Display zwei senkrecht zueinander stehende Linien dargestellt sind, auf welchen jeweils die Sollposition durch ein entsprechendes Symbol markiert ist, wobei die aktuelle Position als entsprechendes Symbol entlang der Linie bewegbar dargestellt ist und von dem Benutzer darauf zu achten ist, bei der Ausrichtung des zweiten Gehäuses 14 jeweils in beiden Achsen die die aktuelle Neigung repräsentierenden Symbole mit den die Sollposition repräsentierenden Symbolen in Deckung zu bringen.

Ein weiteres Ausführungsbeispiel der grafischen Darstellung zeigt Figur 3. Auf dem nicht dargestellten Display wird in starrer Position ein Symbol 33' dargestellt, wobei ein dazu ähnliches Symbol 35' verdreht zu dem Symbol 33' dargestellt ist. Je nach Ausrichtung des zweiten Gehäuses 14 bewegt und/oder verdreht sich das Symbol 35', wobei innerhalb des Symbols 35' eine schraffierte Fläche 36 angeordnet ist, deren' Fläche wächst, je besser die Ausrichtung des zweiten Gehäuses 14 mit der gewünschten Solllage übereinstimmt.

Weitere Anzeigeformen sind möglich. Wesentlich dabei ist, dass für den Benutzer auf einfache Art und Weise optisch erkennbar ist, wie stark die derzeitige Ausrichtung des zweiten Gehäuses 14 von der gewünschten Ausrichtung abweicht und dass Änderungen an der Ausrichtung des zweiten Gehäuses 14 direkt auf dem Display dargestellt werden.

Zur Ausrichtung des zweiten Gehäuses 14 gegenüber dem ersten Gehäuse 12 ist somit einerseits nur ein Testlichtsender von Nöten, wodurch die Kosten für die Sensoranordnung 10 gesenkt werden. Zudem kann die Sensoranordnung 10 mit nur einer Person ausgerichtet werden, da die Person an dem zweiten Gehäuse 14 die Ausrichtung korrigieren und direkt kontrollieren kann, ob sich das zweite Gehäuse 14 bereits in der gewünschten Position befindet oder welche Korrekturen noch von Nöten sind. Mit Hilfe des Neigungssensors werden die Winkel α, γ relativ zu der Horizontalen entsprechend ausgerichtet.

Nach Abschluss dieses Justierungsschrittes befindet sich das zweite Gehäuse 14 in der gewünschten Position relativ zu der X-Achse, der Y-Achse und der Z-Achse sowie in der gewünschten Neigung relativ zur Y-Achse und zur X-Achse. Eine derartige Ausrichtung ist beispielsweise in Figur 1b gezeigt. Mit Hilfe des Neigungssensors kann jedoch keine Verdrehung um die Z-Achse, d.h. der Winkel β, bestimmt werden. Die Ausrichtung im Hinblick auf dem Winkel β gegenüber der Vertikalen, d.h. der Y-Achse, kann im Anschluss an die Ausrichtung hinsichtlich der verbleibenden Freiheitsgrade erfolgen. Dazu kann beispielsweise der Testlichtempfänger reflektierend ausgebildet werden, so dass der von dem Testlichtsender ausgesandte Lichtstrahl 25 an dem Testlichtempfänger reflektiert wird und überprüft werden kann, ob der reflektierte Lichtstrahl in sich selbst zurück reflektiert wird. Auf diese Weise wird eine besonders einfache, kostengünstige und effektive Justierung der optoelektronischen Sensoranordnung 10 ermöglicht.

### Bezugszeichenliste

- 10: Sensoranordnung
- 12: erstes Gehäuse
- 14: zweites Gehäuse

- 20: Überwachungsbereich

- 25: Lichtstrahl

- 30: Koordinatensystem
- 32: Ursprung
- 33: Symbol
- 33': Symbol
- 35: Symbol
- 35': Symbol
- 36: Fläche

- X: Strahlachse
- Y: Querachse
- Z: Längsachse

- α: Winkel
- β: Winkel
- γ: Winkel

## Patentansprüche

1. Verfahren zum Justieren einer optoelektronischen Sensoranordnung (10) zur Überwachung eines Überwachungsbereichs (20) mit einem ersten Gehäuse (12), in welchem wenigstens zwei Lichtsender angeordnet sind, und mit einem zweiten Gehäuse (14), in welchem wenigstens zwei Lichtempfänger angeordnet sind, mit den Schritten:
- Anordnen des ersten Gehäuses (12) an einer ersten Seite des Überwachungsbereichs (20) derart, dass ein vom Lichtsender ausgesandter Lichtstrahl den Überwachungsbereich (20) durchquert,
- Anordnen des zweiten Gehäuses (14) an dem ersten Gehäuse (12) derart, dass die Gehäuse (12, 14) parallel zueinander angeordnet werden, wobei diese Position eine Solllage im Hinblick auf die Winkel (α, γ) gegenüber der Horizontalen definiert,
- Bestimmen und Erfassen der Solllage des zweiten Gehäuses (14) im Raum,
- Anordnen des zweiten Gehäuses (14) auf einer der ersten Seite gegenüberliegenden Seite des Überwachungsbereichs und
- Ausrichten des zweiten Gehäuses (14) derart, dass die Winkel (α, γ) gegenüber der Horizontalen den entsprechenden Winkeln (α, γ) der Solllage entsprechen.

2. Verfahren nach Anspruch 1,
**dadurch gekennzeichnet, dass** der Schritt des Anordnens des zweiten Gehäuses (14) auf der der ersten Seite gegenüberliegenden Seite des Übezwachungsbereichs (20) derart erfolgt, dass ein von einem im ersten Gehäuse (12) angeordneten Testlichtsender ausgesandter Lichtstrahl (25) auf einen in dem zweiten Gehäuse (14) angeordneten Testlichtempfänger trifft.

3. Verfahren nach Anspruch 1 oder 2,
**dadurch gekennzeichnet, dass** die Bestimmung der Solllage des zweiten Gehäuses (14) im Raum mit einem Neigungssensor erfolgt.

4. Verfahren nach einem der vorhergehenden Ansprüche,
**dadurch gekennzeichnet, dass** die Ausrichtung des zweiten Gehäuses (14) mit einer Auswerteeinheit überprüft wird, welche die aktuelle Neigung des zweiten Gehäuses mit der Solllage vergleicht und den Vergleich grafisch darstellt.

5. Verfahren nach Anspruch 4,
**dadurch gekennzeichnet, dass** die grafische Darstellung derart erfolgt, dass die aktuelle Neigung als ein Symbol (35) in einem Koordinatensystem (30) abgebildet wird, dessen Ursprung (32) der Solllage entspricht.

6. Verfahren nach Anspruch 4,
**dadurch gekennzeichnet, dass** die grafische Darstellung derart erfolgt, dass die aktuelle Neigung in zwei senkrecht stehenden Achsen unabhängig voneinander durch zwei Symbole dargestellt wird.

7. Verfahren nach einem der vorhergehenden Ansprüche,
**dadurch gekennzeichnet, dass** das zweite Gehäuse (14) im Hinblick auf den Winkel (β) gegenüber der Vertikalen ausgerichtet wird.

8. Optoelektronische Sensoranordnung (10) mit einem ersten Gehäuse (12), in welchem wenigstens zwei Lichtsender angeordnet sind, und mit einem zweiten Gehäuse (14), in welchem wenigstens zwei Lichtempfänger angeordnet sind, wobei an dem zweiten Gehäuse (14) ein Neigungssensor zur Erfassung der Neigung des zweiten Gehäuses (14) gegenüber der Horizontalen angeordnet ist, und wobei der Neigungssensor mit einer Auswerteeinheit verbunden ist, welche derart ausgebildet ist, dass die aktuelle Neigung des zweiten Gehäuses (14) mit einer Solllage verglichen werden kann.

9. Optoelektronische Sensoranordnung nach Anspruch 8,
**dadurch gekennzeichnet, dass** das erste Gehäuse (12) eine Anlagekontur aufweist, an welche das zweite Gehäuse (14) mit einer entsprechenden Anlagekontur anlegbar ist.

10. Optoelektronische Sensoranordnung nach Anspruch 8 oder 9,
**dadurch gekennzeichnet, dass** die Auswerteeinheit mit einem Display verbunden ist, auf welchem das Ergebnis des Vergleichs grafisch darstellbar ist.

11. Optoelektronische Sensoranordnung nach einem der Ansprüche 8 bis 10,
**dadurch gekennzeichnet, dass** sowohl die aktuelle Neigung des zweiten Gehäuses (14) als auch die Solllage des zweiten Gehäuses(14) grafisch darstellbar ist.

12. Optoelektronische Sensoranordnung nach einem der Ansprüche 8 bis 11,
**dadurch gekennzeichnet, dass** der Neigungssensor als Beschleunigungssensor ausgebildet ist.

13. Optoelektronische Sensoranordnung nach einem der Ansprüche 8 bis 12,
**dadurch gekennzeichnet, dass** in dem ersten Gehäuse (12) mehrere Lichtsender und in dem zweiten Gehäuse (14) entsprechend viele Lichtempfänger angeordnet sind.
